# EUROPÄISCHE PATENTSCHRIFT

(11) **EP 0 623 081 B1**
(45) Veröffentlichungstag und Bekanntmachung des Hinweises auf die Patenterteilung: **27.09.1995**
(21) Anmeldenummer: 93902241.4
(22) Anmeldetag: 22.01.1993
(51) Int. Cl.: B60T 13/567

(54) **BETÄTIGUNGSEINHEIT FÜR KRAFTFAHRZEUGBREMSEN**
ACTUATING UNIT FOR MOTOR VEHICLE BRAKES
UNITE DE COMMANDE POUR FREINS DE VEHICULES AUTOMOBILES

(30) Priorität: 31.01.1992 DE 4202820
(43) Veröffentlichungstag der Anmeldung: 09.11.1994
(73) Patentinhaber: LUCAS INDUSTRIES PUBLIC LIMITED COMPANY, Birmingham, B19 2XF (GB)
(72) Erfinder: SCHLÜTER, Peter, D-5411 Kammerforst (DE)
(74) Vertreter: Goetz, Rupert, Dipl.-Ing.
(86) Internationale Anmeldenummer: EP9300143
(87) Internationale Veröffentlichungsnummer: WO9314964

(56) Entgegenhaltungen:
- FR-A- 2 432 412
- GB-A- 2 102 089

## Beschreibung

Die Erfindung betrifft eine Betätigungseinheit für Kraftfahrzeugbremsen mit
- einem Bremskraftverstärker, der ein vorderes und ein hinteres Gehäuseteil aufweist und mindestens eine bewegliche Zwischenwand enthält, an der sich ein Differenzdruck erzeugen läßt,
- einem Hauptbremszylinder, der einen am vorderen Gehäuseteil befestigten Flansch mit mindestens einem durchgehenden Loch aufweist, und
- mindestens einer Schraube mit einem Schaft, der sich durch das Loch im Flansch sowie durch die beiden Gehäuseteile und die bewegliche Zwischenwand des Bremskraftverstärkers hindurcherstreckt, einem vor dem vorderen Gehäuseteil angeordneten Kopf sowie einem aus dem hinteren Gehäuseteil herausragenden Gewindeabschnitt, der in ein ortsfestes Gewinde an einer Trennwand eines Kraftfahrzeugs einschraubbar ist.

Eine solche Betätigungseinheit ist aus der EP 0 119 880 A1 bekannt. Zwei Schrauben erstrecken sich mit ihrem Schaft durch je ein Loch im Flansch der Hauptbremszylinders sowie durch je eines von zwei Rohren hindurch, die innerhalb des Bremskraftverstärkers parallel zu dessen Achse angeordnet, am hinteren Gehäuseteil befestigt und am vorderen Gehäuseteil axial verschiebbar geführt sind. Mit diesen Schrauben läßt sich der Hauptbremszylinder zusammen mit dem Bremskraftverstärker vom Motorraum eines Kraftfahrzeugs aus an dessen Spritzwand befestigen, an der zu diesem Zwecke Muttern befestigt sind. Somit sind Handhabungen in der Fahrgastzelle zum Befestigen des Hauptbremszylinders und des Bremskraftverstärkers nicht erforderlich. Bei dieser Art, den Hauptbremszylinder und den Bremskraftverstärker zusammenzuhalten und beide an der Spritzwand zu befestigen, ist es nicht möglich, den Hauptbremszylinder vom Bremskraftverstärker zu trennen, ohne daß dieser zuvor von der Spritzwand abgebaut worden ist.

Aus der DE 28 30 262 C2 ist eine weitere Betätigungseinheit für Kraftfahrzeugbremsen bekannt, bei der ein Hauptbremszylinder und ein Bremskraftverstärker gemeinsam mittels eines Paars Gewindebolzen an der Spritzwand eines Kraftfahrzeugs zu befestigen sind. Die Gewindebolzen erstrecken sich achsparallel durch den Bremskraftverstärker hindurch und haben je einen vorderen Gewindeabschnitt sowie je einen hinteren Gewindeabschnitt, der sich durch die Spritzwand hindurchstecken und von der Fahrgastzelle aus mit je einer Mutter befestigen läßt. Zum Befestigen des Bremskrafterstärkers an der Spritzwand eines Kraftfahrzeugs sind also neben Handhabungen vom Motorraum aus auch Handgriffe erforderlich, die nur in der Fahrgastzelle ausgeführt werden können. Am vorderen Gehäuseteil des Bremskraftverstärkers sind zwei Kohlschrauben befestigt, die sich durch je ein Loch im Flansch des Hauptbremszylinders hindurcherstrecken. Die Gewindebolzen sind durch je eine dieser Hohlschrauben hindurchgesteckt. Auf den vorderen Gewindeabschnitt jedes Gewindebolzens ist eine kleine Mutter so aufgeschraubt, daß sie gegen die vordere Stirnfläche der zugehörigen Hohlschraube drückt. Auf die beiden Hohlschrauben ist je eine größere Mutter aufgeschraubt, die von vorne her gegen den Flansch des Hauptbremszylinders drückt. Der Innendurchmesser der größeren Muttern ist größer als der größte Außendurchmesser der kleinen Muttern. Infolgedessen läßt sich der Hauptbremszylinder vom Bremskraftverstärker abbauen, ohne daS dieser von der Spritzwand gelöst wird. Das geschieht dadurch, daß die größeren Muttern von den Hohlschrauben abgeschraubt und über die kleinen Muttern hinweg nach vorne abgezogen werden. Anschließend läßt sich auch der Flansch des Hauptbremszylinders über die kleinen Muttern hinweg abziehen, ohne daS diese gelockert werden.

Diese bekannte Anordnung zum Befestigen des Bremskraftverstärkers und des Hauptbremszylinders hat allerdings eine erhebliche axiale Baulänge und läßt sich deshalb schwer unterbringen, wenn am Hauptbremszylinder ein Bremsflüssigkeitsbehälter od. dgl. in üblicher Weise befestigt ist.

Der Erfindung liegt die Aufgabe zugrunde, eine im wesentlichen aus einem Bremskraftverstärker und einem Hauptbremszylinder zusammengesetzte Betätigungseinheit für Kraftfahrzeugbremsen derart weiterzubilden, daS raumsparende Befestigungselemente genügen, um Hauptbremszylinder und Bremskraftverstärker zusammenzuhalten, die Betätigungseinheit als ganzes an einer Trennwand, insbesondere Spritzwand, eines Kraftfahrzeugs von dessen Motorraum aus, ohne in der Fahrgastzelle auszuführende Handgriffe, zu befestigen und außerdem einen nachträglichen Austausch des Hauptbremszylinders zu ermöglichen, ohne daß der Bremskraftverstärker von der Trennwand des Kraftfahrzeugs abgebaut werden muß.

Die Aufgabe ist erfindungsgemäß mit den Merkmalen des Anspruchs 1 gelöst. Vorteilhafte Weiterbildungen der Erfindung sind Gegenstand der Unteransprüche.

Im folgenden werden Ausführungsbeispiele der Erfindung mit weiteren Einzelheiten anhand schematischer Zeichnungen beschrieben.

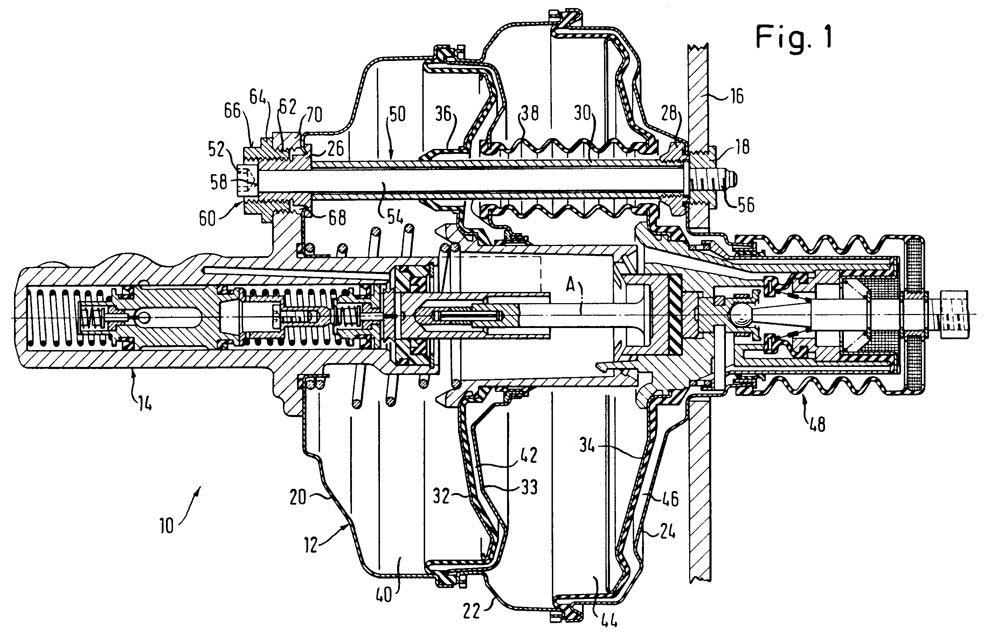

- Fig. 1 bis 3: zeigen drei Ausführungsbeispiele erfindungsgemäßer Betätigungseinheiten für Kraftfahrzeugbremsen in je einem axialen Längsschnitt.

Die in Fig. 1 dargestellte Betätigungseinheit 10 besteht im wesentlichen aus einem pneumatischen Bremskraftverstärker 12 in üblicher Tandembauweise und einem hydraulischen Hauptbremszylinder 14 in ebenfalls üblicher Bauweise für eine Zweikreis-Bremsanlage. Bremskraftverstärker 12 und Hauptbremszylinder 14 sind längs einer Achse A miteinander fluchtend angeordnet und so gestaltet, daß die Betätigungseinheit 10 sich als ganzes an einer Trennwand 16, insbesondere Spritzwand, eines Kraftfahrzeugs befestigen läßt, die zu diesem Zwecke Gewindebüchsen 18 oder dergleichen aufweist.

Der Bremskraftverstärker 12 hat ein vorderes, ein mittleres und ein hinteres Gehäuseteil 20 bzw. 22 bzw. 24, die in üblicher Weise durch Tiefziehen aus verhältnismäßig dünnem Stahlblech hergestellt sind. Am vorderen Gehäuseteil 20 ist ein Paar hülsenförmige innere Gewindeteile 26 dicht befestigt, beispielsweise durch Bördeln, wobei ein Dichtring eingelegt sein kann. In entsprechender Weise ist am hinteren Gehäuseteil 24 ein Paar hülsenförmige hintere Gewindeteile 28 dicht befestigt. Jedes innere Gewindeteil 26 ist mit dem entsprechenden hinteren Gewindeteil 28 durch ein steifes Rohr 30 verbunden, das in ein Innengewinde des hinteren Gewindeteils 28 dicht eingeschraubt und am inneren Gewindeteil 26 ebenfalls dicht befestigt ist, beispielsweise durch Schweißen.

Der Innenraum des Bremskraftverstärkers 12 ist durch eine vordere bewegliche Zwischenwand 32, eine mittlere ortsfeste Zwischenwand 33 und eine hintere bewegliche Zwischenwand 34 sowie durch elastische Bälge 36 und 38, welche die vordere bewegliche Zwischenwand 32 bzw. die hintere bewegliche Zwischenwand 34 gegen die Rohre 30 abdichten, in vier Kammern 40, 42, 44 und 46 unterteilt. Die Kammern 40 und 44 sind über einen zentralen Bereich des Bremskraftverstärkers 12 ständig miteinander verbunden und sind außerdem in nicht dargestellter, üblicher Weise an eine Vakuumquelle, beispielsweise an ein Ansaugrohr eines Verbrennungsmotors, angeschlossen. Die Kammern 42 und 46 sind über die elastischen Bälge 38 ebenfalls ständig miteinander verbunden, wie dies bei Bremskraftverstärkern der Tandembauweise üblich ist.

Im hinteren Bereich des Bremskraftverstärkers 12 ist eine Steuerventileinheit 48 von ebenfalls üblicher Bauart angeordnet, die im Ruhezustand für einen Druckausgleich zwischen sämtlichen genannten Kammern sorgt, bei Betätigung hingegen die beiden Kammern 40 und 44 von den beiden Kammern 42 und 46 trennt und in diese Umgebungsluft einströmen läßt, so daß an den beiden beweglichen Zwischenwänden 32 und 34 ein Differenzdruck entsteht, der nach vorne gerichtete Kräfte zum Betätigen des Hauptbremszylinders 14 erzeugt.

Durch jedes der inneren Gewindeteile 26, das sich daran anschließende Rohr 30 und das zugehörige hintere Gewindeteil 28 hindurch ist von vorne nach hinten eine Schraube 50 eingeschoben, die einen Kopf 52, einen zylindrischen Schaft 54 und einen hinteren Abschnitt 56 mit Außengewinde zum Einschrauben in eine der Gewindebüchsen 18 aufweist. Der Kopf 52 - gemäß Fig. 1 handelt es sich um einen zylindrischen Kopf mit Innensechskant - liegt an einer vorderen Stirnfläche 58 des zugehörigen inneren Gewindeteils 26 an. Sobald die Schrauben 50 festgezogen, also ihr hinterer Gewindeabschnitt 56 fest in die zugehörige Gewindebüchse 18 an der Trennwand 16 des Kraftfahrzeugs eingeschraubt und dadurch der Schaft 54 unter Zugspannung gesetzt ist, herrscht eine entsprechende Druckspannung im zugehörigen Rohr 30. Dies gilt unabhängig davon, ob der Hauptbremszylinder 14 gemeinsam mit dem Bremskraftverstärker 12 oder erst nachträglich an die Trennwand 16 angebaut wird, und gilt auch dann, wenn der Hauptbremszylinder 14, beispielsweise wegen eines nachträglich festgestellten Schadens, ausgewechselt wird.

Normalerweise wird die Betätigungseinheit 10 als ganzes zum Einbau in ein Kraftfahrzeug bereitgestellt, und deshalb wird der Hauptbremszylinder 14 zunächst an den Bremskraftverstärker 12 angebaut. Zu diesem Zweck ist jedem der beiden hülsenförmigen inneren Gewindeteile 26 ein äußeres Gewindeteil 60 zuge-ordnet, das einen hülsenförmigen zylindrischen Ansatz 62, eine Schulter 64 und einen Außensechskant 66 oder eine andere Gestaltung zum Ansetzen eines drehmomentübertragenden Werkzeugs aufweist. Jedes der beiden äußeren Gewindeteile 60 greift mit seinem zylindrischen Ansatz 62 in ein durchgehendes Loch 68 in einem am Hauptbremszylinder 14 ausgebildeten Flansch 70 ein und wird auf das zugehörige innere Gewindeteil 26 aufgeschraubt, bis die Schulter 64 fest am Flansch 70 anliegt. Dadurch wird der Flansch 70 gegen das obere Gehäuseteil 20 gespannt. Die inneren Gewindeteile 26 hintergreifen das Blech des vorderen Gehäuseteils 20 und drücken es derart gegen die Rückseite des Flansches 70, daß eine sonst übliche versteifende Einlage im vorderen Gehäuseteil 20 entbehrlich ist.

Die Schrauben 50 können bei der in Fig. 1 dargestellten Ausführungsform vor oder nach dem Zusammenbau des Bremskraftverstärkers 12 mit dem Hauptbremszylinder 14 in die Rohre 30 eingeschoben werden. Sie bleiben jedenfalls an Ort und Stelle, wenn der Hauptbremszylinder 14 nach dem Anbau der Betätigungseinheit 10 an die Trennwand 16 ausgewechselt werden muß. Der Innendurchmesser der äußeren Gewindeteile 60 ist nämlich etwas größer als der Außendurchmesser des Kopfes 52 der zugehörigen Schraube 50. Infolgedessen kann jedes der äußeren Gewindeteile 60 vom zugehörigen inneren Gewindeteil 26 abgeschraubt und über den Kopf 52 der zugehörigen Schraube 50 hinweg abgezogen werden, wodurch der Flansch 70 frei wird und der Hauptbremszylinder 14 somit ebenfalls abgezogen werden kann.

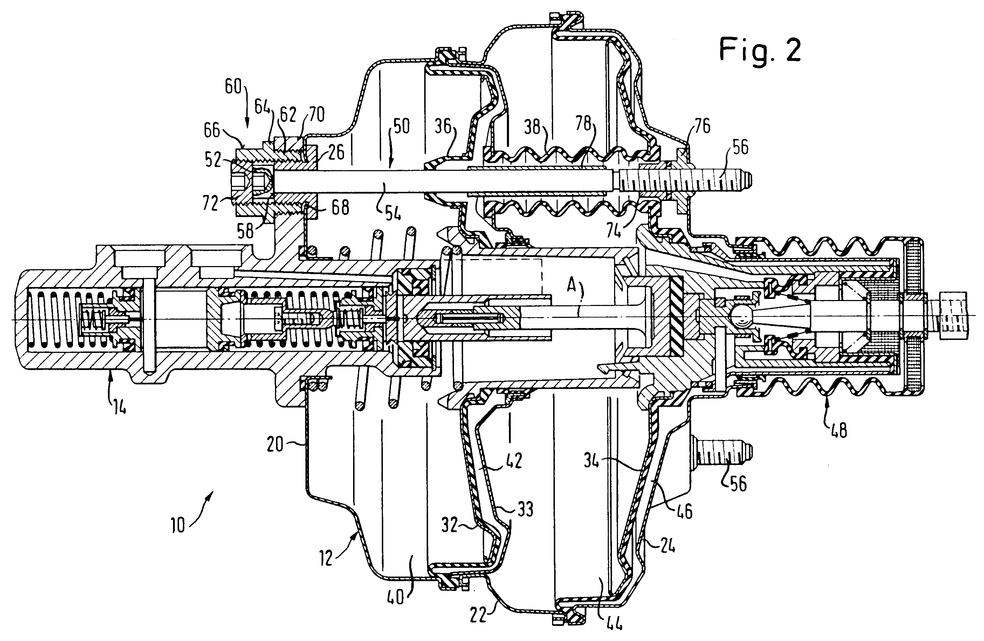

Die Betätigungseinheit 10 gemäß Fig. 2 unterscheidet sich von der in Fig. 1 dargestellten vor allem dadurch, daß die Rohre 30 fortgelassen sind und die Schrauben 50 deren Aufgabe als Abstandhalter übernehmen. Zu diesem Zweck ist in jedes der äußeren Gewindeteile 60 ein Deckel 72 derart eingeschraubt, daß der Kopf 52 der zugehörigen Schraube 50 zwischen diesem Deckel 72 und der vorderen Stirnfläche 58 des inneren Gewindeteils 26 fest eingespannt ist. Ferner ist an jeder Schraube 50 ein hinterer Anschlag 74 ausgebildet, und an diesem liegt ein am hinteren Gehäuseteil 24 befestigter Stützring 76 an, durch den sich der hintere Abschnitt 56 der Schraube 50 hindurcherstreckt. Gemäß Fig. 2 ist der hintere Anschlag 74 eine auf den hinteren Abschnitt 56 aufgeschraubte Justiermutter, die nach dem Justieren arretiert wird, beispielsweise durch Verstemmen oder mit Sicherungslack.

Damit die Schrauben 50 vor dem Anbringen der zugehörigen Deckel 72 nicht nach vorne aus den Stützringen 76 herausrutschen können, tragen sie an ihrem Schaft 54 je einen Sicherungskörper 78, der gemäß Fig. 2 von einer aufgeschobenen Hülse gebildet ist und nach einer begrenzten Vorwärtsverschiebung der betreffenden Schraube gegen den Balg 36 stößt.

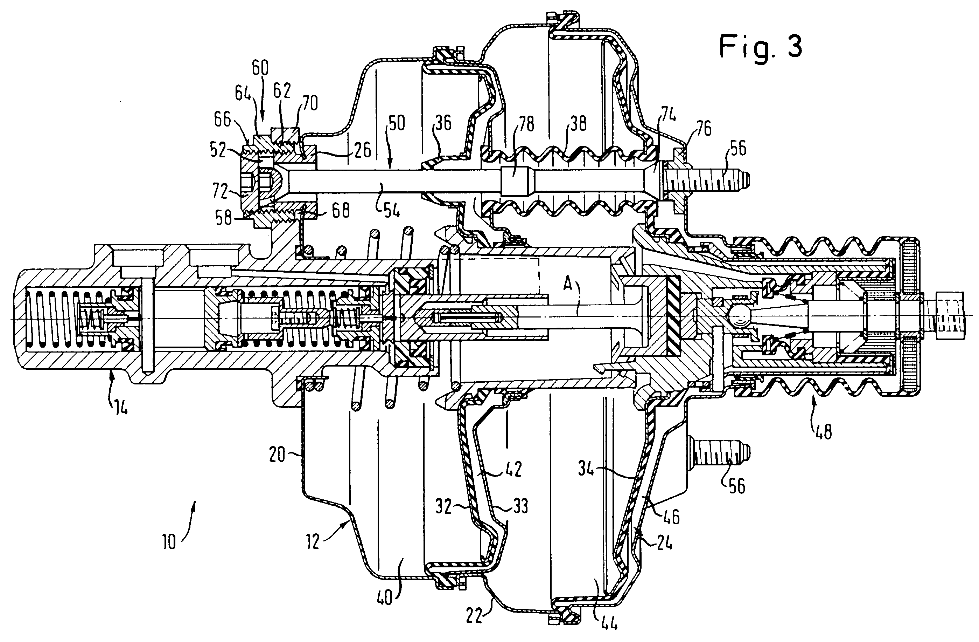

Gemäß Fig. 3 kann jede der Schrauben 50 einen an ihr einstückig ausgebildeten hinteren Anschlag 74 aufweisen. Falls eine Justierung nötig ist, kann zwischen dem Anschlag 74 und dem zugehörigen Stützring 76 ein mehr oder weniger dicker Dichtring eingelegt werden. Es ist in jedem Fall wichtig, daS jeder der hinteren Anschläge 74 gegen den zugehörigen Stützring 76 abdichtet; deshalb ist zweckmäßigerveise ein Dichtungsring zwischengelegt. Gemäß Fig. 3 ist jede der Schrauben 50 auch mit ihrem Sicherungskörper 78 einstückig ausgebildet.

## Patentansprüche

1. Betätigungseinheit (10) für Kraftfahrzeugbremsen, mit
- einem Bremskraftverstärker (12), der ein vorderes und ein hinteres Gehäuseteil (20, 24) aufweist und mindestens eine bewegliche Zwischenwand (32, 34) enthält, an der sich ein Differenzdruck erzeugen läßt,
- einem Hauptbremszylinder (14), der einen am vorderen Gehäuseteil (20) befestigten Flansch (70) mit mindestens einem durchgehenden Loch (68) aufweist, und
- mindestens einer Schraube (50) mit einem Schaft (54), der sich durch das Loch (68) im Flansch (70) sowie durch die beiden Gehäuseteile (20, 24) und die bewegliche Zwischenwand (32, 34) des Bremskraftverstärkers (12) hindurcherstreckt, einem vor dem vorderen Gehäuseteil (20) angeordneten Kopf (52) sowie einem aus dem hinteren Gehäuseteil (24) herausragenden Gewindeabschnitt (56), der in ein ortsfestes Gewinde an einer Trennwand (16) eines Kraftfahrzeugs einschraubbar ist,
**dadurch gekennzeichnet,** daß
- am vorderen Gehäuseteil (20) ein hohles inneres Gewindeteil (26) befestigt ist, das eine vordere Stirnfläche (58) aufweist,
- die Schraube (50) sich mit ihrem Schaft (54) durch das innere Gewindeteil (26) hindurcherstreckt und sich mit ihrem Kopf (52) an dessen vorderer Stirnfläche (58) abstützt,
- der Flansch (70) zwischen dem inneren Gewindeteil (26) und einem hohlen äußeren Gewindeteil (60) eingespannt ist, dessen Innendurchmesser größer als der Außendurchmesser des Kopfes (52) der Schraube (50) ist, und
- das äußere Gewindeteil (60) einen hülsenförmigen Ansatz (62) aufweist, der in das Loch (68) des Flansches (70) eingreift und mit dem inneren Gewindeteil (26) verschraubt ist.

2. Betätigungseinheit nach Anspruch 1,
**dadurch gekennzeichnet,**
daß der Kopf (52) der Schraube (50) mindestens teilweise innerhalb des äußeren Gewindeteils (26) angeordnet ist.

3. Betätigungseinheit nach Anspruch 2,
**dadurch gekennzeichnet,**
daß der Kopf (52) der Schraube (50) zwischen dem inneren Gewindeteil (26) und einem Deckel (72) eingespannt ist, welcher mit dem äußeren Gewindeteil (60) verschraubt ist.

4. Betätigungseinheit nach Anspruch 3,
**dadurch gekennzeichnet,**
daS die Schraube (50) einen hinteren Anschlag (74) hat, mit dem sie sich am hinteren Gehäuseteil (24) abstützt.

5. Betätigungseinheit nach Anspruch 4,
**dadurch gekennzeichnet,**
daß der hintere Anschlag (74) in der Art einer Mutter auf den hinteren Abschnitt (56) der Schraube (50) aufgeschraubt, innerhalb des Bremskraftverstärkers (12) angeordnet und gegen Verdrehen gesichert ist.

6. Betätigungseinheit nach einem der Ansprüche 3 bis 5,
**dadurch gekennzeichnet,**
daß die Schraube (50) mit einem innerhalb des Bremskraftverstärkers (12) angeordneten Sicherungskörper (78) verbunden ist, der sie hindert, vor dem Verschrauben mit der Trennwand (16) des Kraftfahrzeugs nach vorne herauszufallen.

7. Betätigungseinheit nach Anspruch 1 oder 2,
**dadurch gekennzeichnet,**
daß die Schraube (50) sich durch ein Rohr (30) hindurcherstreckt, das innerhalb des Bremskraftverstärkers (12) angeordnet ist und einen vorgegebenen Abstand zwischen dem vorderen und dem hinteren Gehäuseteil (20, 24) aufrechterhält.

8. Betätigungseinheit nach Anspruch 7,
**dadurch gekennzeichnet,**
daS das Rohr (30) mit einem hinteren Gewindeteil (28) verschraubt ist, das am hinteren Gehäuseteil (24) befestigt ist.

## Claims

1. An actuator unit (10) for motor vehicle brakes,
comprising
- a brake pressure booster (12) which comprises front and rear housing parts (20, 24) and includes at least one movable partition (32, 34) at which differential pressure can be generated,
- a master cylinder (14) which includes a flange (70) fastened to the front housing part (20) and having at least one through hole (68), and
- at least one bolt (50) which comprises a shaft (54) extending through the hole (68) in the flange (70) and through the two housing parts (20, 24) as well as the movable partition (32, 34) of the booster (12), a head (52) disposed in front of the front housing part (20), and a threaded portion (56) projecting out of the rear housing part (24) and adapted to be screwed into a stationary thread presented in a dividing wall (16) of a motor vehicle, **characterized** in that
- a hollow, inner threaded member (26) having a front face (58) is fastened to the front housing part (20),
- the shaft (54) of the bolt (50) passes through the inner threaded member (26) and the head (52) of the bolt rests on the front face (58) thereof,
- the flange (70) is clamped between the inner threaded member (26) and a hollow, outer threaded member (60) whose inner diameter is greater than the outer diameter of the head (52) of the bolt (50), and
- the outer threaded member (60) includes a sleeve-like extension (62) which engages in the hole (68) formed in the flange (70) and is screw connected to the inner threaded member (26).

2. The actuator unit as claimed in claim 1, characterized in that the head (52) of the bolt (50) is disposed at least partly within the outer threaded member (26).

3. The actuator unit as claimed in claim 2, characterized in that the head (52) of the bolt (50) is clamped between the inner threaded member (26) and a cover (72) which is screw connected to the outer threaded member (60).

4. The actuator unit as claimed in claim 3, characterized in that the bolt (50) includes a rear stop (74) by which it rests on the rear housing part (24).

5. The actuator unit as claimed in claim 4, characterized in that the rear stop (74) is screwed like a nut on the rear portion (56) of the bolt (50) and is disposed inside the booster (12) and locked against rotation.

6. The actuator unit as claimed in any one of claims 3 to 5, characterized in that the bolt (50) is connected to a retention element (78) which is arrranged inside the booster (12) and prevents the bolt from falling out to the front prior to being threaded into the dividing wall (16) of the motor vehicle.

7. The actuator unit as claimed in claim 1 or 2, characterized in that the bolt (50) extends through a tube (30) disposed within the booster (12) and maintaining a predetermined distance between the front and rear housing parts (20, 24).

8. The actuator as claimed in claim 7, characterized in that the tube (30) is screw connected to a rear threaded member (28) which is fastened to the rear housing part (24).

## Revendications

1. Unité de commande (10) pour freins de véhicules automobiles, comportant
- un amplificateur de la force de freinage (12) , qui présente une pièce avant de carter (20) et une pièce arrière de carter (24), et qui comporte au moins une cloison intercalaire mobile (32, 34) sur laquelle peut s'exercer une pression différentielle,
- un cylindre principal de frein (14), qui présente une bride (70) fixée à la pièce avant de carter (20), cette bride comportant au moins un trou traversant (68), et
- au moins une vis (50) comportant une tige (54) qui traverse le trou (68) de la bride (70) ainsi que les deux pièces de carter (20, 24) et la cloison intercalaire mobile (32, 34) de l'amplificateur de pression, une tête (52), disposée en avant de la pièce avant (20) du carter, ainsi qu'une partie filetée (56) dépassant de la pièce arrière (24) du carter, cette partie filetée (56) pouvant être vissée dans un filetage solidaire d'une paroi de séparation (16) d'un véhicule automobile,
caractérisée en ce que
- sur la pièce avant (20) du carter, est fixée une pièce intérieure filetée creuse (26), qui présente une surface frontale avant (58),
- la vis (50) passe, avec sa tige (54), au travers de la pièce intérieure filetée (26) et s'appuie, avec sa tête (52), sur la surface frontale (58) avant de cette pièce,
- la bride (70) est serrée entre la pièce intérieure filetée (26) et une pièce extérieure filetée creuse (60), dont le diamètre intérieur est plus grand que le diamètre extérieur de la tête (52) de la vis (50), et
- la pièce extérieure filetée (60) présente un prolongement (62) en forme de douille, qui est engagé dans le trou (68) de la bride (70) et est lié par vissage à la pièce intérieure filetée (26).

2. Unité de commande suivant la revendication 1, caractérisée en ce que la tête (52) de la vis (50) est disposée, au moins en partie, à l'intérieur de la pièce extérieure filetée (60).

3. Unité de commande suivant la revendication 2, caractérisée en ce que la tête (52) de la vis (50) est serrée entre la pièce intérieure filetée (26) et un couvercle (72) qui est lié par vissage à la pièce extérieure filetée (60).

4. Unité de commande suivant la revendication 3, caractérisée en ce que la vis (50) porte une butée arrière (74), avec laquelle elle s'appuie sur la pièce arrière (24) du carter.

5. Unité de commande suivant la revendication 4, caractérisée en ce que la butée arrière (74) est vissée, à la manière d'un écrou, sur la partie arrière (56) de la vis (50), est disposée à l'intérieur de l'amplificateur de la force de freinage (12) et est empêchée de tourner.

6. Unité de commande suivant l'une des revendications 3 à 5, caractérisée en ce que la vis (50) est reliée à un organe de sécurité (78) disposé à l'intérieur de l'amplificateur de la force de freinage (12) et empêchant cette vis de tomber en dehors, vers l'avant, avant d'être vissée sur la paroi de séparation (16) du véhicule automobile.

7. Unité de commande suivant la revendication 1 ou la revendication 2, caractérisée en ce que la vis (50) passe au travers d'un tube (30) disposé à l'intérieur de l'amplificateur de la force de freinage (12) et maintient une distance déterminée entre la pièce avant (20) et la pièce arrière (24) du carter.

8. Unité de commande suivant la revendication 7, caractérisée en ce que le tube (30) est vissé sur une pièce arrière filetée (28), qui est fixée à la pièce arrière (24) du carter.
